# EUROPEAN PATENT SPECIFICATION

(11) **EP 2 482 364 B1**
(45) Date of publication and mention of the grant of the patent: **07.03.2018**
(21) Application number: 12153078.6
(22) Date of filing: 30.01.2012
(51) Int. Cl.: H01M 2/12

(54) **Electric storage element**
Elektrisches Speicherelement
Élément de stockage d'électricité

(30) Priority: 31.01.2011 JP 2011018755; 06.12.2011 JP 2011266810
(43) Date of publication of application: 01.08.2012
(73) Proprietor: GS Yuasa International Ltd., Kisshoin, Minami-ku, Kyoto-shi, Kyoto 601-8520 (JP)
(72) Inventor: Shiraishi, Yu, Kyoto, 601-8520 (JP); Nakamoto, Takeshi, Kyoto, 601-8520 (JP)
(74) Representative: Vossius & Partner Patentanwälte Rechtsanwälte mbB

(56) References cited:
- EP-A1- 0 875 949
- WO-A1-2009/130740
- DE-A1-102007 063 191
- JP-A- 1 052 377
- US-A- 4 770 958
- US-A1- 2003 049 521
- US-A1- 2009 159 347

## Description

The present invention relates to an electric storage element such as a battery, a capacitor and the like.

There has been conventionally known, as a battery that is an example of an electric storage element, a configuration in which a degassing hole formed on a battery sealing plate (cover) is covered by a protection film, and an internal pressure of the battery is configured capable of being decreased by forming a ligulate shaped slit on this protection film (for example, WO 93/56052).

Further, as another battery, a configuration has been conventionally known in which a safe valve casing is integrally formed with a rubber-made valve member that closes a through hole of a cover portion, the valve member is elastically deformed by an increase in an internal pressure of the battery, and components therein can flow out to a periphery thereof via the through hole formed on the safe valve casing (for example, see JP-A-2007-018968).

However, in the configuration described in WO 98/56052, since it is the configuration merely having a notch in the protection film, there is a risk that the increased internal pressure cannot be alleviated satisfactorily due to the notch being welded by receiving influence of heat and the like.

Further, in the configuration of JP-A-2007-018968, since it is configured for pressing the rubber-made valve member by the safe valve casing, it is difficult to accurately open the valve at a predetermined internal pressure. US2009/159347 A1 discloses an electric storage element with a safety valve protection member that is welded to the package.

An object of the present invention is to provide an electric storage element that can secure an appropriate air flow to its periphery in a case where a safe valve accurately operates at a predetermined internal pressure and the safe valve is opened while an adhesion of dust and the like to the safe valve is prevented. Also preventing the protection member from falling out of the package.

According to an aspect of the invention, an electric storage element includes: an external terminal having an exposed surface which is exposed to the outside from a package, a current collector which is disposed inside of the package and is connected to the external terminal, and an electrode assembly which is disposed inside of the package and is connected to the current collector, wherein the package includes a safe valve and a protection member covering the safe valve, and the protection member forms a space portion formed between itself and the safe valve and a communicating portion communicating the space portion and a periphery of the protection member.

The protection member covering the safe valve communicates with its periphery by the communicating portion in advance. Thus, if an internal pressure increases and the safe valve is opened, fluid that had spouted to can surely be flown out to the periphery.

According to an aspect of the invention, the protection member may include a plurality of communication portions.

According to an aspect of the invention, the communicating portions may be formed at point symmetric positions with respect to a center of the safe valve.

Even if the fluid inside spouts out from the safe valve, a pressure is more likely to exert evenly with respect to the protection member, so that a defect such as a separation from the package due to force being concentrated on one point hardly occurs.

According to an aspect of the invention, the protection member has a part of the connecting portion to the package, which is configured to be detachable from the package by the safe valve being opened and the fluid spouting therefrom.

According to an aspect of the invention, the protection member is configured by a pedestal portion
protruding from the package and a sheet portion integrated with the pedestal portion.

The structure of the protection member can be simplified, and thereby can be made easier to fabricate and cheaper.

According to an aspect of the invention, the pedestal portion may be configured by a part of the package.

According to this configuration, the structure of the protection member can further be simplified, and thereby can be made cheaper.

According to an aspect of the invention, the pedestal portion may be configured by a plurality of protruding portions, and the communication portion may be a region formed between the protruding portions and between the package and the sheet portion.

Even if a part of the pedestal portion falls out from the package, or a part of the sheet portion falls out from the pedestal portion, a connecting state can be maintained by a remaining part, and the protection member itself is unlikely to fall out from the package.

In this case, the communicating portions may be formed at opposing positions.

Since the fluid that had spouted out by the safe valve being opened can smoothly flow out from the communicating portion, a pressure of the spouted fluid exerts on the pedestal portion, and the separation of the pedestal portion from the package can effectively be prevented.

According to an aspect of the invention, the pedestal portion may be configured by a cylindrical portion covering a periphery of the safe valve, and the communicating portion may be a through hole or a notch formed on the cylindrical portion.

According to an aspect of the invention, the sheet portion may include a detachable portion. As the detachable portion, any configuration may be adopted so long as it can be detached by the fluid that had spouted out from the safe valve that is a slit line (a straight line or a dotted line) and the like exerting thereon with a predetermined pressure or more.

If a pressure at a necessary amount or more exerts on the sheet portion by the fluid that had spouted out by the safe valve being opened, an opening can be formed on the sheet portion by the detachable portion. Thus, the spouted fluid can appropriately be flown to the periphery without damaging the pedestal portion and the like.

According to an aspect of the invention, the safe valve may be configured to tear by an increase of the internal pressure with the connecting portion remaining at a part thereof, and the sheet portion of the protection member may be connected to the pedestal portion at least on a connecting portion side of the safe valve.

Even if the safe valve is torn, the sheet portion is connected to the pedestal portion at the connecting portion side with less displacement, thus is less susceptible to an influence of the torn portion, and the sheet portion is less likely to detach from the pedestal portion.

According to an aspect of the invention, the safe valve may tear by the increase of the internal pressure with the connecting portion remaining at a part thereof, and the torn portion may have a length that does not contact with the sheet portion.

Since the torn portion of the safe valve does not contact with the sheet portion, unnecessary load does not exert on the protection member. Thus, the detachment of the sheet portion from the pedestal portion, or the detachment of the pedestal portion from the package can be prevented.

According to an aspect of the invention, the package may include a protruding portion protruding outward at a position along an outer edge of an arranged region of the safe valve.

A region to form the safe valve can be secured inside the protruding portion, and the fabrication thereof can be made easier.

According to an aspect of the invention, the package may have a substantially rectangular-parallelepiped shape and may be configured by a cover configuring one surface thereof and an electric storage element container configuring other surfaces thereof, and the safe valve and the protection member may be formed on the cover.

### BRIEF DESCRIPTION OF THE DRAWINGS

Fig. 1 is a perspective view of a battery in an embodiment according to the present invention;
Fig. 2 is a front cross-sectional view of the battery in the embodiment according to the present invention;
Fig. 3 is a perspective view of a cover shown in Fig. 1, as viewed from the top;
Fig. 4 is an exploded perspective view of Fig. 3;
Fig. 5 is a perspective view of the cover shown in Fig. 1, as viewed from the bottom and partly enlarged cross-sectional views of the cover;
Fig. 6 is an exploded perspective view of the cover shown in Fig. 5;
Figs. 7A and 7B are cross-sectional views illustrating fabrication processes for a negative electrode terminal shown in FIG. 4.

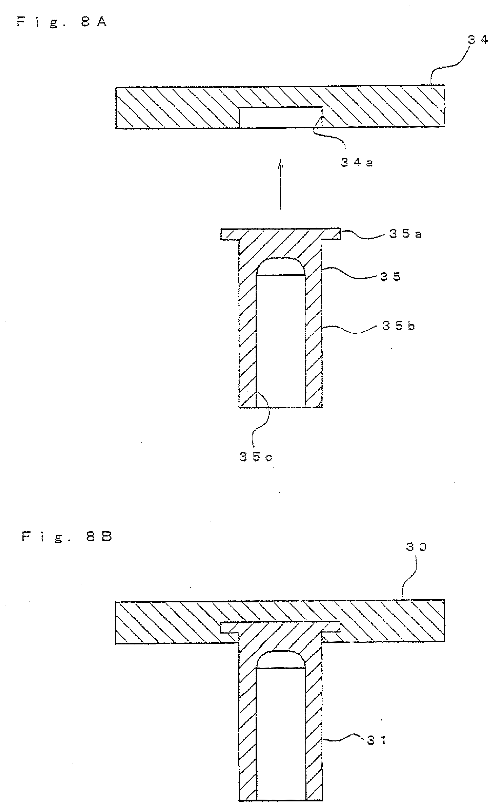

Figs. 8A and 8B are cross-sectional views illustrating other fabrication processes for the negative electrode terminal shown in Fig. 4.
Fig. 9A is a perspective view illustrating a protection structure of a safe valve of another embodiment, Fig. 9B is a bottom view thereof, and Fig. 9C is a perspective view illustrating a protection structure of a safe valve of yet another embodiment;
Fig. 10A and Fig. 10B are perspective views each illustrating a protection structure of a safe valve of yet another embodiment, and Fig. 10C is a plane view illustrating a protection structure of a safe valve of yet another embodiment; and
Fig. 11A is a perspective view partially illustrating a safe valve and a cover showing a structure of the cover of yet another embodiment, Fig. 11B is a cross-sectional view thereof, and Fig. 11C is a cross-sectional view after an assembly thereof.

### DESCRIPTION OF THE PREFERRED EMBODIMENT

Hereinafter, an embodiment according to the present invention will be described with reference to the attached drawings. In the following description, the terms indicating specific directions or positions (including, for example, "above," "below," "side," and "end") are used, as required. Here, the use of the terms is directed to facilitate the understanding of the invention, and therefore, the meanings of the terms should not restrict the technical scope of the present invention. Moreover, the following description is merely an essential example, and therefore, should not intend to restrict the present invention and its application or usage.

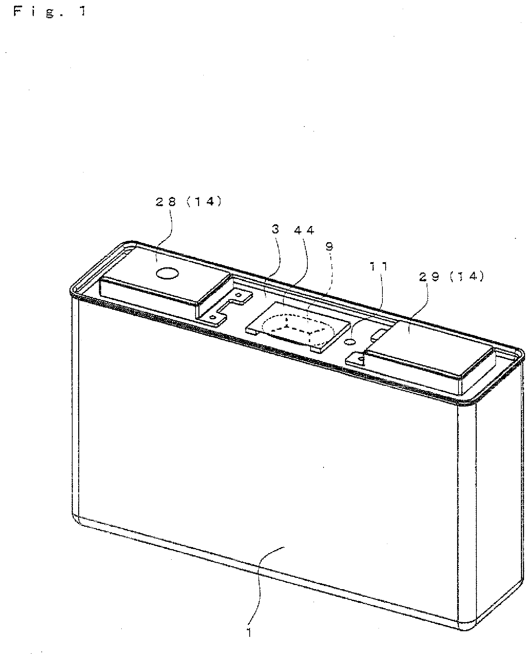

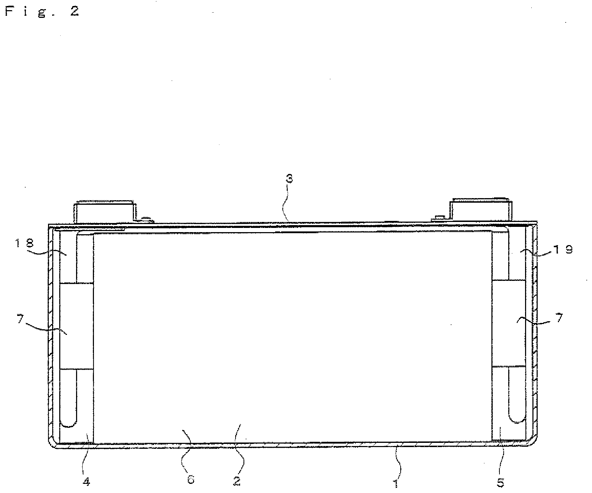

Fig. 1 shows a nonaqueous electrolytic secondary battery that is an example of an electric storage element. The nonaqueous electrolytic secondary battery houses an electrode assembly 2 inside of a battery case 1, and is sealed with a cover 3, as shown in Fig. 2. Here, the battery case 1 and the cover 3 constitute a package.

The battery case 1 is formed into a rectangular parallelepiped shape opened at the upper surface thereof, and is made of aluminum, an aluminum alloy or like material.

The electrode assembly 2 includes a negative electrode 4 formed of a copper foil, a positive electrode 5 formed of an aluminum foil, and a separator 6 made of a porous resin film and interposed between the negative electrode 4 and the positive electrode 5, like the prior art, although its details will not be shown. All of these members are formed into a belt shape, and the negative electrode 4 and the positive electrode 5 are flat wound in such a manner as to be disposed inside of the battery case 1 in the state in which the negative electrode 4 and the positive electrode 5 are displaced with respect to the separator 6 oppositely in a widthwise direction. As described later, a negative electrode current collector 18 is connected to the negative electrode 4 via a clip 7 whereas a positive electrode current collector 19 is connected to the positive electrode 5 via another clip 7.

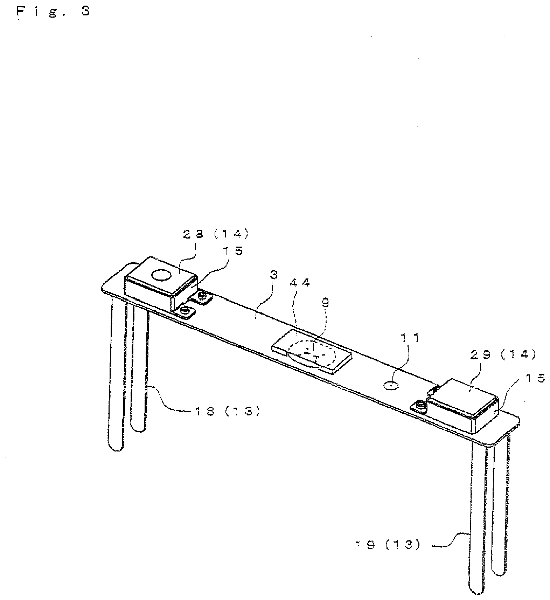

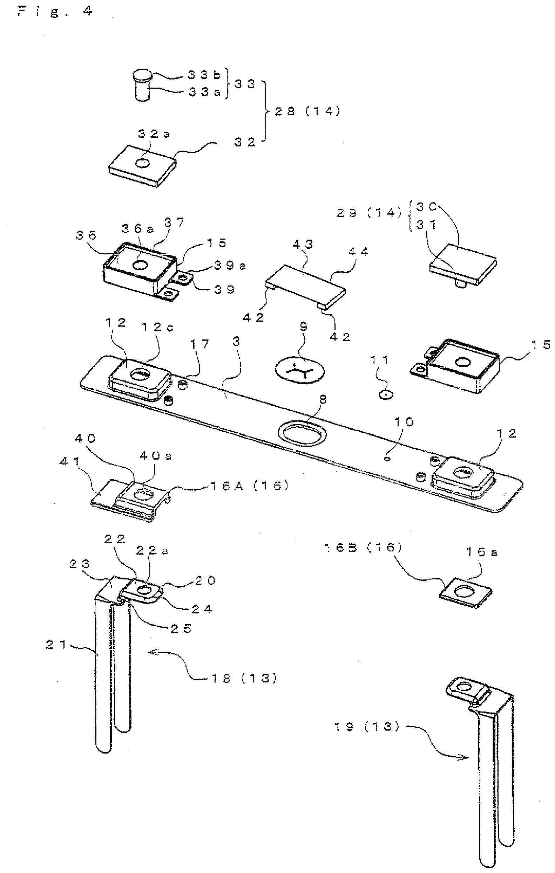

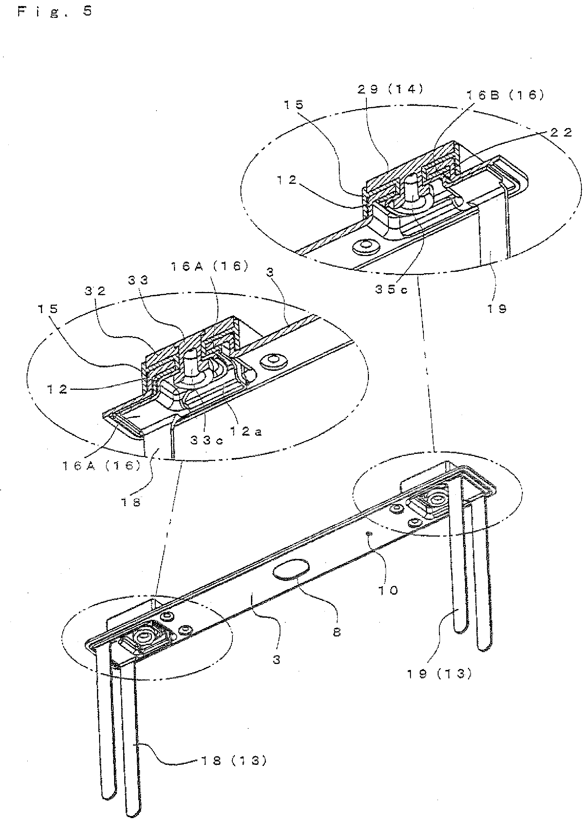

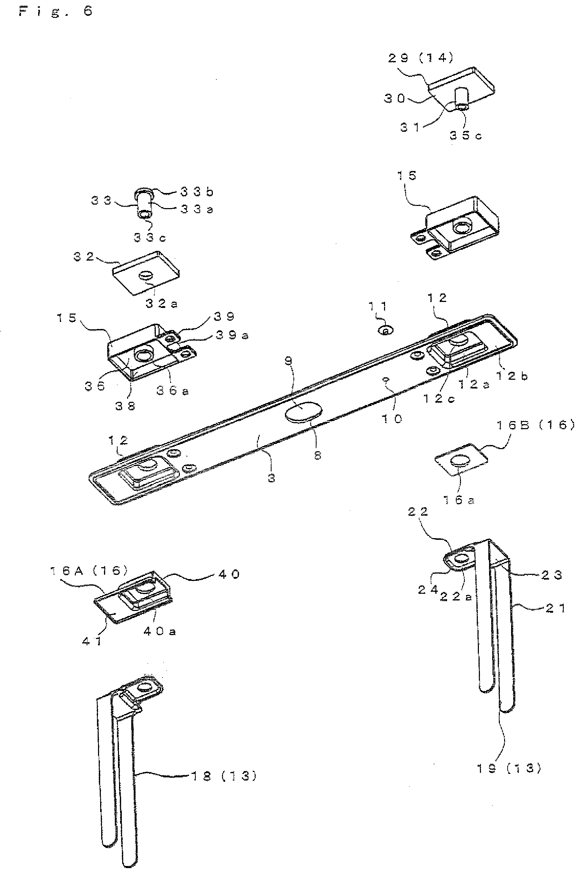

As shown in Figs. 3 to 6, the cover 3 is made of a metallic elongated plate having a rectangular shape, as viewed on plane. A substantially elliptic opening 8 having a step from the upside is formed at the center of the cover 3. A safe valve 9 made of metal is fitted to the opening 8. A substantially H-shaped thin portion is formed at the safe valve 9. The thin portion is torn in the case of an abnormal increase in inner pressure, so that pressure can be decreased.

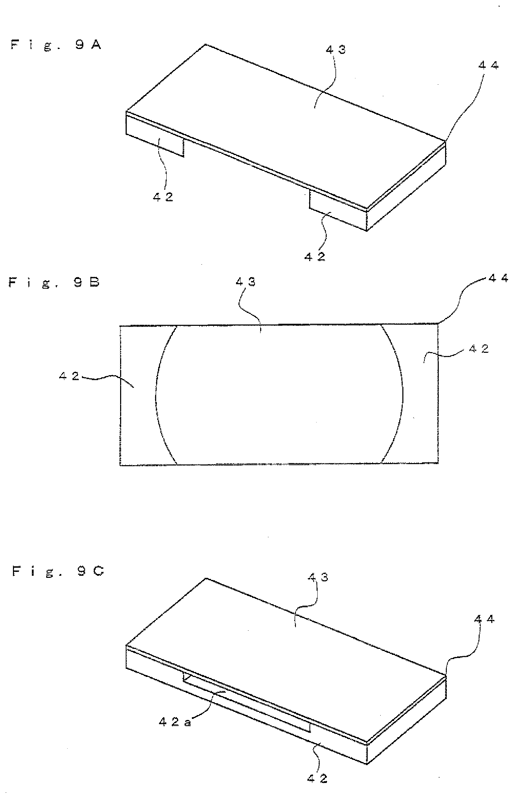

As shown further in Figs. 9A and 9B, pedestal portions 42 are formed at opposing positions in a longitudinal direction at a periphery of the safe valve 9, respectively. Further, a sheet portion 43 is adhered over top surfaces of both pedestal portions 42. Further, the pedestal portions 42 and the sheet portion 43 configure a protection member 44 covering the safe valve 9. This protection member 44 prevents dust and rubbish in a peripheral atmosphere from being adhered onto a surface of the safe valve 9. Due to this, an occurrence of a defect such as the safe valve 9 being degraded due to a deposit and the like can be prevented. Further, if an internal pressure of the battery increases due to an abnormality and the thin portion of the safe valve 9 breaks and thereby opens, a fluid that had spouted is smoothly flown to the periphery through a gap formed between the safe valve 9 and the sheet portion 43 by the pedestal portions 42. Thus, the protection member 44 does not hinder the flow of the fluid, and can operate appropriately even in an abnormal state.

A small-diameter liquid injection hole 10 is formed at one end of the cover 3, and it is designed to be closed via a plug 11 after liquid injection.

An engagement receiving portion 12, which is formed into a substantially rectangular shape, as viewed on plane, and is formed at the lower surface at both ends of the cover 3 so as to expand upward. In the engagement receiving portion 12, a shallow guide recess 12b is formed around an engagement recess 12a at the lower surface except one side. Moreover, a through hole 12c is formed at the center of a ceiling constituting the engagement recess 12a. An external terminal 14 and a current collector 13 are adapted to fit to the engagement recess 12 and the guide recess 12b via an upper gasket 15 and a lower gasket 16, respectively.

Lock projections 17 projecting upward from two portions in the widthwise direction are formed in the vicinity of the inside of each of the engagement receiving portion 12 in the cover 3. Each of the lock projections 17 is formed into a bottomed cylindrical shape at the same time when the cover 3 is pressed. The upper gasket 15, described later, is locked to the lock projections 17, to be thus positioned in a rotational direction.

The current collectors 13 include the negative current collector 18 made of copper and the positive current collector 19 made of aluminum. In the current collector 13, a connection receiver 20 and legs 21 extending from both sides of the connection receiver 20 are formed by pressing a metallic elongated plate material. The connection receiver 20 is constituted of a fitting portion 22 to be fitted to the recess formed at the cover 3 and a mount portion 23 continuous to the fitting portion 22. The fitting portion 22 is formed into a planar shape, and has a through hole 22a at the center thereof and a guide edge 24 extending in a vertical direction at the circumferential edge except one side continuous to the mount portion 23. The side of the mount portion 23 functions as a continuous portion 25 extending further beyond the guide edge 24, and thus, reaches the mount portion 23. The guide edge 24 and the continuous portion 25 satisfactorily enhance the rigidity of the connection receiver 20 in the current collector 13.

The legs 21 extend in the vertical direction from both side edges of the mount portion 23 along both side surfaces of the electrode assembly 2. Further, the legs 21 are connected to the positive electrode 5 and the negative electrode 4 in the electrode assembly 2 via the clip 7, respectively.

The external terminals 14 include a negative electrode external terminal 28 and a positive electrode external terminal 29. The external terminal 14 includes a flat plate 30 and a shaft 31 extending downward from the center at a lower surface thereof. To a surface (an exposed surface) of the flat plate 30 is welded a bus bar, not shown.

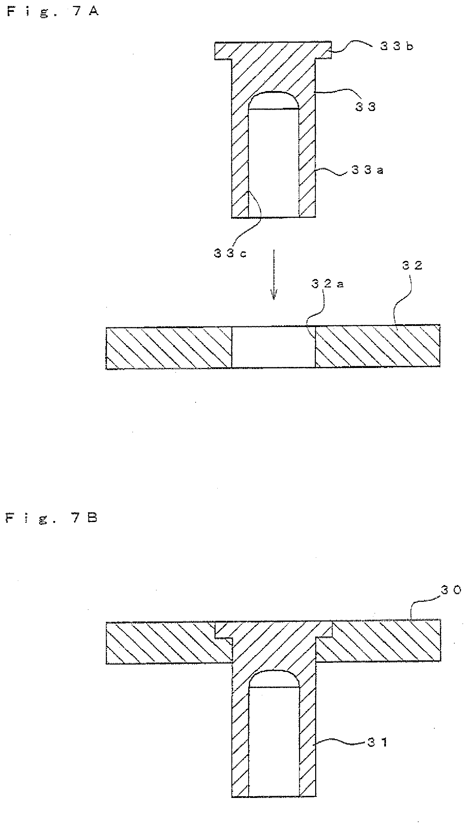

As shown in Fig. 7, the negative electrode external terminal 28 is formed of an aluminum plate 32 having a rectangular shape, as viewed on plane, and a copper rivet 33. That is to say, a shaft 33a of the rivet 33 is inserted into a through hole 32a formed at the center of the aluminum plate 32, and then, a flange 33b is press-fitted into the through hole 32a by pressing. The dimension of an inner diameter of the through hole 32a formed at the plate 32 is slightly greater than that of an outer diameter of the shaft 33a of the rivet 33 and sufficiently smaller than that of an outer diameter of the flange 33b. As a consequence, the flange 33b presses and enlarges the through hole 32a by press-fitting, to be thus turned to a press-fitted state, and further, the press-enlarged portion is brought into press-contact with the shaft 33a, to be thus integrated therewith. Moreover, a circular recess 33c is formed at the center of the tip surface of the shaft 33a in the rivet 33. The shaft 33a is inserted into the respective through holes of the upper gasket 15, the engagement receiving portion 12 of the cover 3, the lower gasket 16, and the negative electrode current collector 18 in a later-described manner, and then, the recess 33c is pressed and enlarged while holding the members therein, followed by securely caulking.

The upper gasket 15 is made of a resin, in which the inner space of a frame having a rectangular shape, as viewed on plane, is divided into an upper terminal holding recess 37 and a lower disposing recess 38 via a partition wall 36. Tongue pieces 39 extend sideways from one of sides constituting a lower opening edge. A cylindrical portion 36a extending downward from the ceiling is formed at the center of the partition wall 36. The cylindrical portion 36a is fitted to a through hole 40a formed at the lower gasket 16 through the through hole 12c formed at the engagement receiving portion 12. A lock hole 39a is formed in each of the two tongue pieces 39, and thus, is fitted to the lock projection 17 formed in the cover 3. The upper gasket 15 conforms to the engagement receiving portion 12 in the cover 3 formed into the rectangular shape, as viewed on plane, and therefore, the upper gasket 15 can be prevented from being positionally deviated in the rotational direction only by placing the upper gasket 15 on the engagement receiving portion 12. In addition, the insertion of the lock projection 17 into the lock hole 39a can securely prevent any positional deviation in the rotational direction.

The lower gasket 16 is made of a plate having a rectangular shape, as viewed on plane, and further, is made of a resin having a through hole 16a at the center thereof. The lower gaskets 16 on the negative electrode side and the positive electrode side are slightly different from each other in shape.

A lower gasket 16A on the negative electrode side includes an expanded portion 40 to be disposed inside of the engagement recess 12a formed at the engagement receiving portion 12 in the cover 3 and a flat portion 41 continuous to the expanded portion 40. The expanded portion 40 is formed into a shape in conformity with the inner surface of the engagement recess 12a of the engagement receiving portion 12 except one side thereof, and further, the through hole 40a is formed at the center thereof. The flat portion 41 is fitted to the guide recess 12b of the engagement receiving portion 12. The lower gasket 16A on the negative electrode side is disposed on the engagement recess 12a constituting the engagement receiving portion 12 in the cover 3, from the lower side, and thus, is held between the cover 3 and the negative electrode external terminal 28. In this held state, the lower gasket 16A intends to insulate between the negative electrode external terminal 28 and the cover 3, and further, seals the through hole 12c formed in the engagement receiving portion 12 in the cover 3 together with the upper gasket 15.

On the other hand, a lower gasket 16B on the positive electrode side is formed into a flat shape, and further, has a through hole 16a at the center thereof, and thus, is disposed inside of the engagement recess 12a constituting the engagement receiving portion 12. The lower gasket 16B on the positive electrode side seals the through hole 12c formed in the engagement receiving portion 12 in the cover 3 together with the upper gasket 15.

With the battery having the above-described configuration, the positional deviation in the rotational direction can be prevented only by forming the disposing recess 38 of the upper gasket 15 at the fitted portion 12 in the cover 3. Consequently, when the shaft 31 of the external terminal 14 is inserted into the respective through holes of the upper gasket 15, the cover 3, the lower gasket 16, and the current collector 13, followed by securely caulking, the upper gasket 15 can be prevented from being positionally deviated. Thus, it is possible to enhance workability of a series of assembling work.

Incidentally, the present invention is not limited to the configuration described in the embodiment, but it may be variously modified.

In the above-described embodiment, the protection structure of the safe valve 9 had beenconfigured by the protection member 44 formed of a pair of pedestal portions 42 arranged opposingly in the longitudinal direction and the sheet portion 43 adhered over their top surfaces, however, this protection member 44 may be configured as follows.

For example, as shown in Fig. 9C, the pedestal portion 42 may be formed so as to surround the safe valve 9. Further, by forming a groove 42 extending in a width direction on the top surface of the pedestal portion 42, the communicating portion connecting with the safe valve 9 is formed between the pedestal portion 42 and the sheet portion 43.

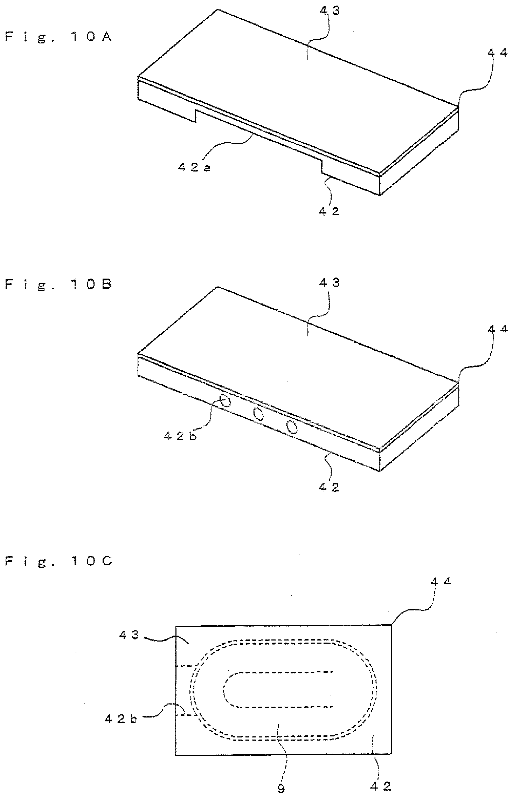

Further, as shown in Fig. 10A, the groove 42a formed on the pedestal portion 42 may be formed not on the top surface but a bottom surface of the pedestal portion 42, and thereby the communicating portion communicating with the safe valve 9 between the pedestal portion 42 and the cover 3 may be formed.

Moreover, as shown in Fig. 10B, the communicating portion configured by the plurality of through holes 42b (which may only be one, and the shape thereof may be an elongated hole and the like) arranged on the pedestal portion 42 may be formed.

According to these configurations, the dust and the like from the periphery becomes even more difficult to adhere to the safe valve 9, and the safe valve 9 can be maintained in a good condition over a long period of time.

Further, in forming the communicating portion formed on the pedestal portion 42 at a plurality of positions, it is preferable that they are arranged point symmetric with respect to the center of the safe valve 9.

According to these configurations, even if the fluid inside spouts out from the safe valve 9, the pressure is more likely to exert evenly with respect to the protection member 44, so it becomes more difficult for the defect such as the separation from the package due to the force concentrated on one point to occur.

Further, as shown in Fig. 10C, a thin portion that is to tear in a ligulate shape may be formed on the safe valve 9, and when this is torn by the rise in the internal pressure, the communicating portion such as the through hole 42b (which may be any of the aforementioned configurations) may be formed in a spouting direction of the fluid.

In this case, the protection member 44 is preferably configured to have a length by which a tip of the torn thin portion does not contact with the sheet portion 43.

Further, it is preferable to provide a connecting portion of the pedestal portion 42 and the sheet portion 43 of the protection member 44 at least at a base (connecting portion) side of the torn thin portion. That is, the pedestal portion 42 and the sheet portion 43 do not necessarily be connected at their entire regions, and a part thereof may be configured detachable. However, by connecting the base side of the torn portion, it is preferable to prevent a whole or a part of the protection member 44 from being detached.

Further, a portion with weaker adhesion with the package compared to other portions may be formed at a part of the pedestal portion 42. According to this configuration, the portion with the weaker adhesion detaches with priority due to the pressure of the fluid that had spouted out from the safe valve 9, so that an opening area of the communicating portion can be enlarged at an early stage. Thus, the entirety of the protection member 44 is prevented from being fallen out from the package.

Further, a detachable portion may be formed on the sheet portion 43 of the protection member 44. As the detachable portion, for example, one in which a slit line (a straight line or a dotted line) is formed on the sheet portion 43 may be exemplified. The detachable portion may simply need to be configured such that the detachable portion tears before the protection member 44 is fallen out from the cover 3 by the pressure that exerts when the safe valve 9 is torn and the fluid inside spouts out. Due to this, even if the safe valve 9 is torn and the fluid inside spouts out, whereby an excessive pressure exerts on the sheet portion 43, the protection member 44 is prevented from being fallen out and dispersing to the periphery.

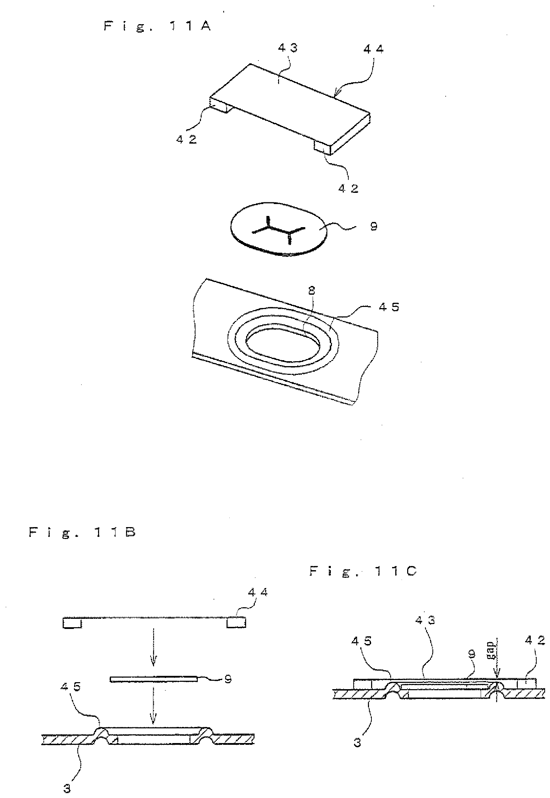

Further, as shown in Fig. 11, the cover 3 may form protruding portions 45 protruding annularly around the region where the safe valve 9 is to be mounted. The protruding portions 45 can be formed concurrently upon press-forming the cover 3. In this case, as shown in Fig. 11C, a height of the protruding portions 45 is set lower than a height of the pedestal portion 42 of the protection member 44, and a predetermined gap is formed between the protruding portions 45 and the sheet portion 43.

According to this configuration, a mounting position of the safe valve 9 on the cover 3 is made clear by the protruding portions 45, and the safe valve 9 can be mounted with high efficiency. Further, by forming the sheet portion 43 around the protruding portions45 and at a position higher than the protruding portions 45 via the pedestal portion 42 instead of a configuration in which a film is directly adhered to a safe valve, the sheet portion 43 can be arranged without being warped, and an upper side of the safe valve 9 can appropriately be protected.

Further, similar to the protruding portions 45, the pedestal portion 42 may be configured to protrude substantially annular by press-forming the cover 3 and the like. Of course, at least a part of the annular potion is cut off so that the communicating portion is formed. According to this configuration, since the pedestal portion 42 is formed on the cover 3, the number of components does not increase, and the fabrication can be done at low cost.

The protection structure of the safe valve 9 of the electric storage element of the present invention can be employed in a capacitor and the like, in addition to a battery such as a lithium ion battery and a lead storage battery.

According to the present invention, since the communicating portion that communicates with the periphery is formed on the pedestal portion of the protection member covering the safe valve, when the internal pressure increases and the safe valve is opened, the fluid that had spouted can surely be flown to the periphery.

## Claims

1. An electric storage element comprising:
a package;
an external terminal including an exposed surface which is exposed to the outside from the package;
a current collector which is arranged inside the package and is connected to the external terminal; and
an electrode assembly which is arranged inside the package and is connected to the current collector, wherein the package includes a safe valve and a protection member covering the safe valve without pressing the safe valve, and
the protection member is configured by a pedestal portion protruding from the package and a sheet portion integrated with the pedestal portion, and forms a space portion formed between the sheet portion and the safe valve and a communicating portion communicating the space portion and a periphery of the protection member, wherein the protection member has a part of the connecting portion to the package configured detachable from the package by the safe valve being opened and fluid spouting therefrom.

2. The electric storage element according to claim 1, wherein the protection member includes a plurality of communication portions.

3. The electric storage element according to claim 2, wherein the communication portions are formed at point symmetric positions with respect to a center of the safe valve.

4. The electric storage element according to any one of claims 1 to 3, wherein the pedestal portion is configured by a part of the package.

5. The electric storage element according to any one of claims 1 to 4, wherein the pedestal portion is configured by a plurality of protruding portions, and the communication portion is a region formed between the protruding portions and between the package and the sheet portion.

6. The electric storage element according to claim 5, wherein the communication portions are formed at opposite positions.

7. The electric storage element according to any of claims 1 to 6, wherein the pedestal portion is configured by a cylindrical portion covering a periphery of the safe valve, and the communication portion is at least one of a through hole and a notch formed on the cylindrical portion.

8. The electric storage element according to any of claims 1 to 7, wherein the sheet portion includes a detachable portion.

9. The electric storage element according to any of claims 1 to 8, wherein the safe valve is configured to tear by an increase of an internal pressure with the connecting portion remaining at a part thereof, and the sheet portion of the protection member is connected to the pedestal portion at least on a connecting portion side of the safe valve.

10. The electric storage element according to any of claims 1 to 8, wherein the safe valve is configured to tear by an increase of an internal pressure with the connecting portion remaining at a part thereof, and a torn portion has a length that does not contact with the sheet portion.

11. The electric storage element according to any of claims 1 to 10, wherein the safe valve is configured to tear by an increase of an internal pressure with the connecting portion remaining at a part thereof, and the communicating portion is formed at an opposite side of the connecting portion.

12. The electric storage element according to any of claims 1 to 11, wherein the package includes a protruding portion protruding outward at a position along an outer edge of an arranged region of the safe valve.

13. The electric storage element according to any of claims 1 to 12, wherein the package has a substantially rectangular-parallelepiped shape and is configured of a cover configuring one surface thereof and an electric storage element container configuring other surfaces thereof, and the safe valve and the protection member are formed on the cover.

## Patentansprüche

1. Elektrisches Speicherelement, das aufweist:
ein Gehäuse;
einen externen Anschluss, der eine freiliegende Oberfläche aufweist, die vom Gehäuse nach außen freiliegt;
einen Stromsammler, der im Gehäuse angeordnet ist und mit dem externen Anschluss verbunden ist; und
eine Elektrodenanordnung, die im Gehäuse angeordnet ist und mit dem Stromsammler verbunden ist, wobei das Gehäuse ein Sicherheitsventil und ein Schutzelement aufweist, das das Sicherheitsventil abdeckt, ohne auf das Sicherheitsventil zu drücken, und
das Schutzelement durch einen Sockelabschnitt, der aus dem Gehäuse vorsteht, und einen Plattenabschnitt konfiguriert ist, der mit dem Sockelabschnitt integriert ist, und einen Abstandsabschnitt, der zwischen dem Plattenabschnitt und dem Sicherheitsventil ausgebildet ist, und einen Kommunikationsabschnitt bildet, der den Abstandsabschnitt und einen Umfang des Schutzelements verbindet, wobei beim Schutzelement ein Teil des Verbindungsabschnitts mit dem Gehäuse so konfiguriert ist, dass er vom Gehäuse lösbar ist, wenn das Sicherheitsventil geöffnet wird und Fluid daraus herausspritzt.

2. Elektrisches Speicherelement nach Anspruch 1, wobei das Schutzelement mehrere Kommunikationsabschnitte aufweist.

3. Elektrisches Speicherelement nach Anspruch 2, wobei die Kommunikationsabschnitte bezüglich einer Mitte des Sicherheitsventils an punktsymmetrischen Positionen ausgebildet sind.

4. Elektrisches Speicherelement nach einem der Ansprüche 1 bis 3, wobei der Sockelabschnitt durch einen Teil des Gehäuses konfiguriert ist.

5. Elektrisches Speicherelement nach einem der Ansprüche 1 bis 4, wobei der Sockelabschnitt durch mehrere vorstehende Abschnitte konfiguriert ist, und der Kommunikationsabschnitt ein Bereich ist, der zwischen den vorstehenden Abschnitten und zwischen dem Gehäuse und dem Plattenabschnitt ausgebildet ist.

6. Elektrisches Speicherelement nach Anspruch 5, wobei die Kommunikationsabschnitte an gegenüberliegenden Positionen ausgebildet sind.

7. Elektrisches Speicherelement nach einem der Ansprüche 1 bis 6, wobei der Sockelabschnitt durch einen zylindrischen Abschnitt konfiguriert ist, der einen Umfang des Sicherheitsventils abdeckt, und der Kommunikationsabschnitt ein Durchgangsloch und/oder eine Kerbe ist, die am zylindrischen Abschnitt ausgebildet ist.

8. Elektrisches Speicherelement nach einem der Ansprüche 1 bis 7, wobei der Plattenabschnitt einen lösbaren Abschnitt aufweist.

9. Elektrisches Speicherelement nach einem der Ansprüche 1 bis 8, wobei das Sicherheitsventil konfiguriert ist, durch eine Zunahme des Innendrucks zu zerreißen, wobei der Verbindungsabschnitt an einem Teil davon verbleibt, und der Plattenabschnitt des Schutzelements mindestens auf einer Verbindungsabschnittseite des Sicherheitsventils mit dem Sockelabschnitt verbunden ist.

10. Elektrisches Speicherelement nach einem der Ansprüche 1 bis 8, wobei das Sicherheitsventil konfiguriert ist, durch eine Zunahme des Innendrucks zu zerreißen, wobei der Verbindungsabschnitt an einem Teil davon verbleibt, und ein zerrissener Abschnitt eine Länge aufweist, die nicht mit dem Plattenabschnitt in Kontakt kommt.

11. Elektrisches Speicherelement nach einem der Ansprüche 1 bis 10, wobei das Sicherheitsventil konfiguriert ist, durch eine Zunahme des Innendrucks zu zerreißen, wobei der Verbindungsabschnitt an einem Teil davon verbleibt, und der Kommunikationsabschnitt auf einer entgegengesetzten Seite des Verbindungsabschnitts ausgebildet ist.

12. Elektrisches Speicherelement nach einem der Ansprüche 1 bis 11, wobei das Gehäuse einen vorstehenden Abschnitt aufweist, der an einer Position längs einer Außenkante eines Anordnungsbereichs des Sicherheitsventils nach außen vorsteht.

13. Elektrisches Speicherelement nach einem der Ansprüche 1 bis 12, wobei das Gehäuse im Wesentlichen eine rechteckige Parallelepipedform aufweist und aus einer Abdeckung, die eine Oberfläche davon bildet, und einem Behälter des elektrischen Speicherclements konfiguriert ist, der andere Oberflächen davon bildet, und das Sicherheitsventil und das Schutzelement an der Abdeckung ausgebildet sind.

## Revendications

1. Élément de stockage d'électricité, comprenant :
un boîtier;
une borne externe présentant une surface exposée à l'extérieur du boîtier ;
un collecteur de courant disposé à l'intérieur du boîtier et relié à la borne externe ; et
une unité d'électrode disposée à l'intérieur du boîtier reliée au collecteur de courant, où le boîtier comprend une soupape de sécurité et un élément de protection recouvrant la soupape de sécurité sans exercer de pression sur la soupape de sécurité, et
où l'élément de protection est constitué d'une partie de socle faisant saillie du boîtier et d'une partie de feuille intégrée à la partie de socle, et présente une partie d'espacement entre la partie de feuille et la soupape de sécurité et une partie de communication entre la partie d'espacement et la périphérie de l'élément de protection, une pièce de la partie de connexion au boîtier de l'élément de protection étant prévue amovible du boîtier quand la soupape de sécurité est ouverte et quand du fluide en sort.

2. Élément de stockage d'électricité selon la revendication 1, où l'élément de protection comprend une pluralité de parties de communication.

3. Élément de stockage d'électricité selon la revendication 2, où les parties de communication sont formées à des emplacements symétriques par rapport à un point, le centre de la soupape de sécurité.

4. Élément de stockage d'électricité selon l'une des revendications 1 à 3, où la partie de socle est formée par une pièce du boîtier.

5. Élément de stockage d'électricité selon l'une des revendications 1 à 4, où la partie de socle est constituée d'une pluralité de parties en saillie, et où la partie de communication est une zone présentée entre les parties en saillie et entre le boîtier et la partie de feuille.

6. Élément de stockage d'électricité selon la revendication 5, où les parties de communication sont formées à des emplacements opposés.

7. Élément de stockage d'électricité selon l'une des revendications 1 à 6, où la partie de socle est formée par une partie cylindrique couvrant la périphérie de la soupape de sécurité, et la partie de communication est un trou traversant et/ou une encoche formée sur la partie cylindrique.

8. Élément de stockage d'électricité selon l'une des revendications 1 à 7, où la partie de feuille comprend une partie amovible.

9. Élément de stockage d'électricité selon l'une des revendications 1 à 8, où la soupape de sécurité est prévue pour se rompre par augmentation d'une pression interne, la partie de connexion restant sur un fragment de celle-ci, et où la partie de feuille de l'élément de protection est raccordée à la partie de socle au moins sur un côté de partie de connexion de la soupape de sécurité.

10. Élément de stockage d'électricité selon l'une des revendications 1 à 8, où la soupape de sécurité est prévue pour se rompre par augmentation d'une pression interne, la partie de connexion restant sur un fragment de celle-ci, et où la longueur de la partie de rupture ne contacte pas la partie de feuille.

11. Élément de stockage d'électricité selon l'une des revendications 1 à 10, où la soupape de sécurité est prévue pour se rompre par augmentation d'une pression interne, la partie de connexion restant sur un fragment de celle-ci, et où la partie de communication est formée sur un côté opposé de la partie de connexion.

12. Élément de stockage d'électricité selon l'une des revendications 1 à 11, où le boîtier comprend une partie en saillie vers l'extérieur à un emplacement le long d'un bord extérieur d'une zone prévue de la soupape de sécurité.

13. Élément de stockage d'électricité selon l'une des revendications 1 à 12, où le boîtier a sensiblement la forme d'un parallélépipède rectangle, et est constitué d'un couvercle formant une surface de celui-ci et d'un conteneur d'élément de stockage d'électricité container formant d'autres surfaces de celui-ci, la soupape de sécurité et l'élément de protection étant formés sur le couvercle.
